# EUROPEAN PATENT APPLICATION

(11) **EP 4 492 415 A1**
(43) Date of publication of application: **15.01.2025**
(21) Application number: 23766661.5
(22) Date of filing: 01.03.2023
(51) Int. Cl.: H01F 38/14, B60L 5/00, B60L 53/12, B60M 7/00, H02J 50/10, H02J 50/70

(54) **POWER TRANSMISSION COIL STRUCTURE AND POWER TRANSMISSION DEVICE EQUIPPED WITH SAME**

(30) Priority: 08.03.2022 JP 2022034957
(71) Applicant: Toda Kogyo Corp., Hiroshima-shi, Hiroshima 732-0828 (JP)
(72) Inventor: KOUJIMA, Jun, Otake-shi, Hiroshima 739-0652 (JP)
(74) Representative: Schiweck Weinzierl Koch Patentanwälte Partnerschaft mbB
(86) International application number: PCT/JP2023/007526
(87) International publication number: WO 2023/171485

(57) **Abstract**

The present disclosure provides a power transmission coil structure (1) comprising: a first magnetic material (10) having a flat shape; a second magnetic material (20) including a central magnetic material (21) provided on a center portion of a surface of the first magnetic material (10), and a peripheral magnetic material (22) provided on a peripheral portion of the surface of the first magnetic material (10); a third magnetic material (30) provided between the central magnetic material (21) and the peripheral magnetic material (22); and a coil (40) disposed in a surface portion of the third magnetic material (30) and wound around the central magnetic material (21), wherein the second magnetic material (20) has a relative permeability that is three times or greater than the third magnetic material (30).

## Description

### TECHNICAL FIELD

The present disclosure relates to a power transmission coil structure for supplying or receiving power, and a power transmission device including the power transmission coil structure.

### BACKGROUND ART

In recent years, power transmission devices utilizing electromagnetic induction have been expected to be applied to the charging of batteries for vehicles, such as electric cars and plug-in hybrid cars. Typically, a power transmission device includes a power supplying coil and a power receiving coil, where the power supplying coil carries a high frequency alternating current, and a high frequency magnetic field generated in that instance is received by the power receiving coil, so that the power is transmitted. In recent years, various proposals for using a coil formed by spirally winding a plurality of coil conductors have been made for such a power transmission device in order to meet a demand for reducing the entire device in thickness.

Generally, such a coil has a plurality of coil conductors adjacent to each other and eddy currents are thus generated between the adjacent conductors due to the magnetic field formed by the conductors, thereby leading to proximity effect. As a result, the coil has an increased electrical resistance and eddy current loss at high frequencies and the power transmission device tends to be reduced in transmission efficiency. For example, Patent Literature 1 then proposes a power transmission device that avoids a reduction in transmission efficiency. Specifically, Patent Literature 1 discloses that a secondary power receiving coil is formed as a coil, and among a magnetic layer located on at least one side of the coil, a shielding layer for blocking electromagnetic noises, and a heat insulating layer, at least the magnetic layer is integrally laminated on the secondary power receiving coil, where the magnetic layer is embedded in gaps between wires of the secondary power receiving coil. This makes it possible to ensure good transmission efficiency of the power transmission device.

Patent Literature 2 then discloses a power transmission device including a power receiving coil and a magnetic green compact formed from a magnetic powder, where the power receiving coil is embedded in the magnetic powder, and the magnetic green compact has a portion adjacent to the power receiving coil and a portion therearound having different green compact densities to have increased magnetic permeability in highly densified magnetic green compact.

### CITATION LIST

### PATENT LITERATURE

[Patent Literature 1] Japanese Laid-Open Patent Publication No. 2008-294385
[Patent Literature 2] Japanese Laid-Open Patent Publication No. 2009-5474

### SUMMARY OF INVENTION

### TECHNICAL PROBLEM

In the case of the power transmission devices as in Patent Literatures 1 and 2, relatively good transmission efficiency is considered to be ensured by having the structure of embedding the magnetic layer in the gaps between the coil conductors, as described above. In this respect, there is still a need for a power transmission device that can further improve transmission efficiency, and for this purpose, a coil structure that can reduce the proximity effect between adjacent coil conductors and efficiently focus the magnetic flux generated from the coil is desired.

The present disclosure is made in view of the foregoing problems and an object of the present disclosure is to provide a power transmission coil structure that can improve transmission efficiency through reducing eddy current losses caused by the proximity effect produced between coil conductors and through efficiently focusing the magnetic flux generated from a coil, and a power transmission device including the power transmission coil structure.

### SOLUTION TO PROBLEM

To achieve the object, the present disclosure includes a coil disposed in a surface portion of a magnetic material, and another magnetic material provided therearound and having a greater relative permeability than said magnetic material.

Specifically, a power transmission coil structure according to the present disclosure is a power transmission coil structure for receiving or supplying power, comprising: a first magnetic material having a flat shape; a second magnetic material including a central magnetic material provided on a center portion of a surface of the first magnetic material, and a peripheral magnetic material provided on a peripheral portion of the surface of the first magnetic material; a third magnetic material provided between the central magnetic material and the peripheral magnetic material; and a coil disposed in a surface portion of the third magnetic material and wound around the central magnetic material, wherein the second magnetic material has a relative permeability that is three times or greater than the third magnetic material.

In the power transmission coil structure according to the present disclosure, the coil is disposed in the surface portion of the third magnetic material provided between the central magnetic material and the peripheral magnetic material, and the third magnetic material is present between adjacent coil conductors, so that the proximity effect due to eddy currents generated between the adjacent coil conductors can be reduced. Thereby, the electrical resistance of the coil is reduced and the increase in eddy current losses can be avoided. Moreover, in the power transmission coil structure according to the present disclosure, the second magnetic material has a relative permeability that is three times or greater than the third magnetic material, so that the magnetic material having a greater relative permeability is arranged inside and outside the coil to have a difference in the relative permeability between the inside and outside of the coil and a part adjacent to the coil conductors. Thereby, the spreading of the magnetic flux generated from the coil can be reduced and the magnetic flux can be focused inside the coil. Therefore, in the power transmission coil structure according to the present disclosure, eddy current losses caused by the proximity effect produced between the coil conductors are reduced and the magnetic flux generated from the coil is efficiently focused, thus providing excellent transmission efficiency.

In the power transmission coil structure according to the present disclosure, the third magnetic material preferably has a relative permeability greater than 1 and smaller than or equal to 10.

In this way, a difference in relative permeability occurs between the part adjacent to the coil conductors and a part surrounding the coil so that the effect of focusing the magnetic flux generated from the coil can be exhibited.

In the power transmission coil structure according to the present disclosure, the peripheral magnetic material protrudes further than the third magnetic material in a thickness direction of the first magnetic material.

In this way, the spreading of the magnetic flux generated from the coil can be reduced and the magnetic flux generated from the coil thus can be more effectively focused inside the coil.

Another subject of the present disclosure is a power transmission device including any of the foregoing power transmission coil strictures.

Such power transmission device includes the foregoing power transmission coil structure according to the present disclosure, so that the proximity effect between coil conductors can be reduced to decrease eddy current losses and the magnetic flux generated from a coil can be effectively focused, thus providing excellent transmission efficiency.

### ADVANTAGEOUS EFFECTS OF INVENTION

In the power transmission coil structure according to the present disclosure, the proximity effect caused by eddy currents generated between the coil conductors is reduced and the magnetic flux generated from the coil is effectively focused, so that the transmission efficiency of the power transmission device can be improved.

### BRIEF DESCRIPTION OF DRAWINGS

Figure 1 is a plan view, as viewed from the top, illustrating a power transmission coil structure according to one embodiment of the present disclosure.
Figure 2 is a cross-sectional view, as taken along a plane II-II indicated in Figure 1, illustrating a power transmission coil structure according to one embodiment of the present disclosure.

### DESCRIPTION OF EMBODIMENTS

Embodiments of the present disclosure are described below with reference to the drawings. In the drawings, externally connecting terminals are not shown. The following description of preferred embodiments is merely an example in nature, and is not intended to limit the present disclosure, methods of applying the present disclosure, or use of the present disclosure.

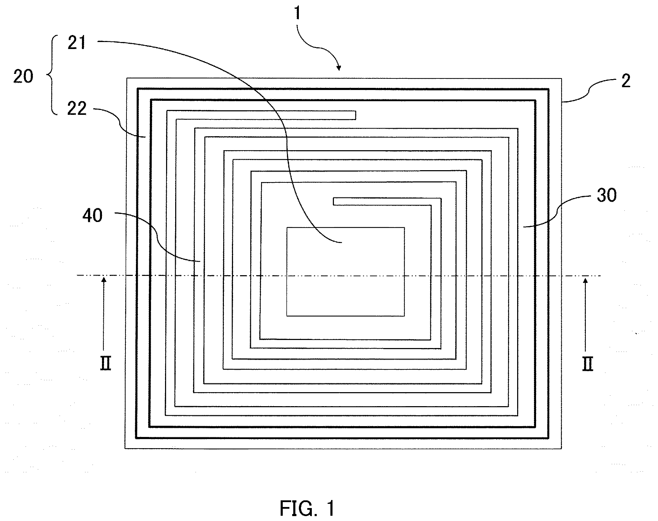

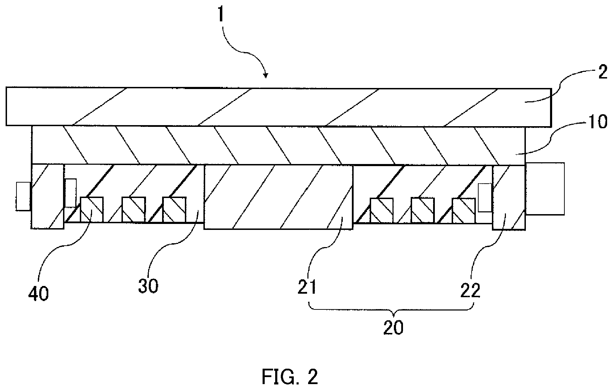

A power transmission coil structure 1 according to one embodiment of the present disclosure is firstly described with reference to Figures 1 and 2. Figure 1 is a plan view as viewed from the top illustrating the power transmission coil structure 1 and Figure 2 shows a cross-sectional view taken along a plane II-II indicated in Figure 1. As shown in Figures 1 and 2, the power transmission coil structure 1 according to the embodiment includes a first magnetic material 10 having a flat shape and arranged on a surface of a substrate 2 that is formed from a conductive material, such as aluminum, and a second magnetic material 20 arranged on a surface of the first magnetic material 10. Specifically, the second magnetic material 20 includes a central magnetic material 21 provided on a center portion of the surface of the first magnetic material 10, and a peripheral magnetic material 22 provided on a peripheral portion of the surface of the first magnetic material 10. A third magnetic material 30 is provided between the central magnetic material 21 and the peripheral magnetic material 22, and a coil 40 is formed wound around the central magnetic material 21 and is disposed in a surface portion of the third magnetic material 30. As shown in Figure 1, the coil 40 is wound to bend at a generally right angle along the shape of the peripheral magnetic material 22. In Figure 2, the coil 40 is arranged so as to be flush with the surface of the third magnetic material 30; however, the coil 40 is not limited to this arrangement and may be configured such that the whole circumference or at least a portion of the coil 40 is disposed in a recess formed in the surface portion of the third magnetic material 30 and the entire coil 40 is able to be seen from the top. Also, the coil 40 is shown to have a rectangular cross-sectional shape; however, the coil 40 is not limited to being a rectangular shape and may be a circular or other polygonal shape. Also, the number of turns and the direction of winding in the coil 40 are not particularly limited. Also, the first magnetic material 10 may include a through hole for connecting a coil conductor pattern to an external terminal.

Magnetic materials used for the first magnetic material 10 and the second magnetic material 20 may include, but not particularly limited to, for example, Mn-Zn ferrites, Ni-Zn ferrites, amorphous metal magnetic materials, and ribbon-shaped nanocrystalline alloy magnetic materials. The first magnetic material 10 and the second magnetic material 20 may be formed as one piece or may be produced as members separate from one another.

Magnetic materials used for the third magnetic material 30 may include, but not particularly limited to, for example, materials obtained by mixing and kneading a resin with an Mn-Zn ferrite powder or Ni-Zn ferrite powder. In the embodiment, the third magnetic material 30 has the coil 40 disposed in its surface portion and thus includes grooves formed along the shape of coil conductors by way of, for example, mold casting.

The magnetic materials used in the embodiment are preferably a soft magnetic material that has a large real part of magnetic permeability (µ') and a small imaginary part of magnetic permeability (µ") at a frequency used. They are preferably those obtained by mixing a metal-based soft magnetic powder with a resin to form into a sheet, a sintered sheet, such as a magnetic spinel ferrite, and a magnetic composite sheet having flexibility by way of affixing a resin film to a sintered sheet. When they are used in a frequency band around 100 kHz in, for example, non-contact power supply applications for EV, Mn-Zn ferrites and Ni-Zn ferrites, for example, are preferable.

The magnetic materials used in the embodiment are preferably ones that can withstand temperature increases and low temperature environments. Thus, the magnetic materials used in the embodiment are preferably formed using, without limitation, a thermosetting resin, such as, a urethane resin, silicone resin, epoxy resin, together with a magnetic material, such as ferrites as described above.

Materials used for the coil 40 may include, but not particularly limited to, for example, conductive materials, such as silver, copper, alloys containing silver. The coil 40 is formed to have a flat shape, and when a wire is used, it may be a flat wire, a round wire, or a litz wire made by stranding a plurality of wires.

As described above, the power transmission coil structure 1 according to the embodiment includes the third magnetic material 30 provided between the central magnetic material 21 and the peripheral magnetic material 22, and particularly, the second magnetic material 20 including the central magnetic material 21 and the peripheral magnetic material 22 has a relative permeability that is three times or greater than the third magnetic material 30. Thereby, the spreading of the magnetic flux generated from the coil 40 can be reduced and the magnetic flux can be focused inside the coil 40. Therefore, it is possible to improve the transmission efficiency of a power transmission device. In the embodiment, the second magnetic material 20 preferably has a relative permeability that is 50 times or greater than, more preferably 100 times or greater than, the third magnetic material 30. Further, as long as the relative permeability of the second magnetic material satisfies the ranges as described above, the relative permeabilities of the central magnetic material 21 and the peripheral magnetic material 22 may be different. Also, the relative permeability of the second magnetic material 20 is preferably equal to or smaller than that of the first magnetic material 10.

In the embodiment, the first magnetic material 10 and the second magnetic material 20 are configured to have a greater content of the magnetic material, and the third magnetic material 30 is configured to have a smaller content of the magnetic material. Thereby, the relative permeability of the third magnetic material 30 is adjusted to be one-third or smaller than those of the first magnetic material 10 and the second magnetic material 20.

In the embodiment, the third magnetic material 30 preferably has a relative permeability greater than 1 and smaller than or equal to 10. Thereby, a difference in relative permeability occurs between a part adjacent to the conductors of the coil 40 and a part surrounding the coil 40 so that the magnetic flux generated from the coil 40 can be efficiently focused.

In the embodiment, the peripheral magnetic material 22 is preferably formed to protrude further than the third magnetic material 30 in a thickness direction of the first magnetic material 10. Thereby, the spreading of the magnetic flux generated from the coil 40 can be reduced and the magnetic flux generated from the coil 40 thus can be more effectively focused inside the coil 40.

Further, in another embodiment of the present disclosure, the first and second magnetic materials 10, 20 and the third magnetic material 30 include magnetic materials having different composition and relative permeabilities, but being in the same amount.

Another embodiment of the present disclosure is then directed to a power transmission device including a power transmission coil structure as described above. The power transmission device includes, for example, an external terminal for connecting to other external devices, and a power source for supplying current to conductors, along with the power transmission coil structure. The power transmission device includes the power transmission coil structure described above, so that, as described above, the proximity effect caused by eddy currents between coil conductors is reduced and the magnetic flux generated from a coil can be effectively focused, thus ensuring excellent transmission efficiency of the power transmission device.

Next, a method for manufacturing a power transmission coil structure is described. Firstly, a first magnetic material 10 and a second magnetic material 20 are processed into desired shapes and arranged, on a surface of a substrate 2. More specifically, as shown in Figure 1, a formed product including the first magnetic material 10 having a flat shape and the second magnetic material 20 having a central magnetic material 21 and a peripheral magnetic material 22 provided on a center portion and a peripheral portion of the first magnetic material 10, respectively, is formed by using a method of, for example, placing a sintered product of a compacted magnetic powder on a surface of the substrate 2 to cut the sintered product into a predetermined shape, of mixing and kneading a resin with a pre-heated magnetic powder to process into a predetermined shape and sinter, or of mixing and kneading a resin with a fired magnetic powder to process into a predetermined shape. In this respect, the formed product including the first magnetic material 10 and the second magnetic material 20 may be formed as one piece or as members separate from one another.

Next, a third magnetic material 30 is formed between the central magnetic material 21 and the peripheral magnetic material 22 arranged on a surface of the first magnetic material 10. Specifically, an Mn-Zn ferrite powder or Ni-Zn ferrite powder and a resin (for example, epoxy, urethane, silicon) are mixed and kneaded and, for example, mold casting is used to form grooves along the shape of coil conductors of a coil 40 as described below. For example, a recess having a spiral shape is preferably formed in the third magnetic material 30 to form a coil 40 having the spiral shape and surrounding the central magnetic material 21. In the embodiment, the first magnetic material 10 and the second magnetic material 20 are configured to have a greater content of a magnetic material, and the third magnetic material 30 is configured to have a smaller content of a magnetic material. Thereby, the relative permeabilities of the first magnetic material 10 and the second magnetic material 20 are adjusted to be three times or greater than that of the third magnetic material 30.

Next, the coil 40 is disposed in a surface portion of the third magnetic material 30. As shown in Figure 1, the coil 40 is wound around the central magnetic material 21 and bent at a generally right angle along the shape of the peripheral magnetic material 22. For example, as described above, the recess having a spiral shape is previously produced in the surface portion of the third magnetic material 30, and the coil 40 is then disposed to be formed in the recess. With the steps as described above, the power transmission coil structure 1 as shown in Figure 1 can be obtained.

Thus, in the power transmission coil structure 1 according to the embodiment, the coil 40 is disposed in the surface portion of the third magnetic material 30 and the third magnetic material 30 is present between adjacent coil conductors, so that the proximity effect due to eddy currents generated between the adjacent coil conductors can be reduced, as described above. As a result, the coil 40 has a reduced electrical resistance and the increase in eddy current losses can be avoided. Further, the second magnetic material 20 has a relative permeability that is three times or greater than the third magnetic material 30, so that a difference in relative permeability occurs between the inside and outside of the coil 40 and a part adjacent to the coil conductors, and the spreading of the magnetic flux generated from the coil 40 can be reduced. Thereby, the magnetic flux can be focused inside the coil 40. Therefore, in the power transmission coil structure 1 according to the present disclosure, the proximity effect due to eddy currents generated between the coil conductors of the coil 40 is reduced and the magnetic flux generated from the coil 40 is efficiently focused, so that the transmission efficiency of the power transmission device can be improved.

### EXAMPLES

Examples in which the present disclosure is applied, and comparative examples, are described below. Examples illustrate the present disclosure and do not limit the scope of the disclosure. In Examples, multiple types of power transmission coil structures within the scope of the present disclosure and multiple types of power transmission coil structures outside the scope of the present disclosure were produced to evaluate a transmission efficiency when each coil structure was used, as described below.

### (Example 1)

A sintered Mn-Zn ferrite product obtained by compacting and sintering was cut into a predetermined shape to form a formed sintered product having a structure of a first magnetic material and a second magnetic material as shown in Figure 2. Next, an Mn-Zn ferrite powder was mixed and kneaded with a two-liquid type epoxy resin to be present in an amount of 50% by weight, and cast molded to form grooves along the shape of coil conductors, and a third magnetic material was thus formed between a central magnetic material and a peripheral magnetic material of the second magnetic material. Thereafter, a coil was formed on the third magnetic material by using a litz wire to produce a power transmission coil structure.

### (Example 2)

80% by weight of an Mn-Zn ferrite powder, 10% by weight of a cellulose resin, and a balance of water were mixed and kneaded, and extrusion-molded into a sheet by using a vacuum extruder, and processed and sintered into a predetermined shape, in order to form a formed sintered product having the structure of the first magnetic material and the second magnetic material as shown in Figure 2. Thereafter, a third magnetic material and a coil were arranged and assembled in the same manner as in Example 1 to produce a power transmission coil structure.

### (Example 3)

A sintered Mn-Zn ferrite product obtained by compacting and sintering was cut into a predetermined shape to form a first magnetic material having the structure as shown in Figure 2. An Mn-Zn ferrite powder was then mixed and kneaded with a silicone resin to be present in an amount of 80% by weight, and processed into a sheet to be further processed into a predetermined shape, in order to form a second magnetic material having the structure as shown in Figure 2. Thereafter, a third magnetic material and a coil were arranged and assembled in the same manner as in Example 1 to produce a power transmission coil structure.

### (Example 4)

A sintered Mn-Zn ferrite product obtained by compacting and sintering was cut into a predetermined shape to form a first magnetic material having the structure as shown in Figure 2. A sintered Ni-Zn ferrite product obtained by compacting and sintering was also cut into a predetermined shape to form a second magnetic material having the structure as shown in Figure 2. Thereafter, a third magnetic material and a coil were arranged and assembled in the same manner as in Example 1 to produce a power transmission coil structure.

### (Example 5)

An Fe amorphous soft magnetic material was formed into a sheet, and laminated into a predetermined shape, and cut to form a first magnetic material and a second magnetic material having the structure as shown in Figure 2. Thereafter, a third magnetic material and a coil were arranged and assembled in the same manner as in Example 1 to produce a power transmission coil structure.

### (Example 6)

A nanocrystalline soft magnetic material was formed into a sheet, and laminated into a predetermined shape, and cut to form a first magnetic material and a second magnetic material having the structure as shown in Figure 2. Thereafter, a third magnetic material and a coil were arranged and assembled in the same manner as in Example 1 to produce a power transmission coil structure.

### (Comparative Example 1)

A first magnetic material was formed using a sintered Mn-Zn ferrite product obtained by compacting and sintering and a third magnetic material portion was processed using a vinyl chloride resin that was a non-magnetic material, to produce a power transmission coil structure without providing a second magnetic material.

### (Comparative Example 2)

A first magnetic material and a second magnetic material were formed in the same manner as in Example 1 and a third magnetic material portion was processed using a vinyl chloride resin that was a non-magnetic material, to produce a power transmission coil structure.

### (Comparative Example 3)

A first magnetic material having the structure as shown in Figure 2 was formed using a sintered Mn-Zn ferrite product obtained by compacting and sintering, and the structure of a second magnetic material as shown in Figure 2 was formed using the material and method for forming the third magnetic material in Example 1, and a third magnetic material was processed in the same manner as in the method in Example 1, to produce a power transmission coil structure.

### (Comparative Example 4)

A first ferrite material having the structure as shown in Figure 2 was formed using a sintered Mn-Zn ferrite product obtained by compacting and sintering, and a second magnetic material having the structure as shown in Figure 2 was formed by mixing and kneading an Mn-Zn ferrite powder with a two-liquid type epoxy resin such that the Mn-Zn ferrite powder is present in an amount of 50% by weight, and a third magnetic material having the structure as shown in Figure 2 is formed by mixing and kneading 10% by weight of an Mn-Zn ferrite powder with a two-liquid type epoxy resin and mold casting to form grooves along the shape of coil conductors, in order to produce a power transmission coil structure.

### (Measurement of relative permeability)

Measurement of relative permeability was performed by using an impedance analyzer. In the measurement, ring-shaped samples with an outer diameter of core of 31.9 mm, an inner diameter of core of 18.9 mm, and a height of core of 5.41 mm were produced by using the same magnetic materials as in Examples and Comparative Examples and having 22 turns of 1 mm copper wire to measure the relative permeability.

### (Measurement of transmission efficiency)

The coil structure of Comparative Example 1 was used for a power supplying coil and the coil structures produced in Examples and Comparative Examples were used for a power receiving coil. The electrical power converted to alternating current by an inverter circuit was input to the power supplying coil, and the electrical power received by the power receiving coil was measured to evaluate a transmission efficiency. The evaluation was expressed by the ratio of the transmission efficiency for Examples and Comparative Examples relative to the transmission efficiency being 100 when the coil structure of Comparative Example 1 was used for the power supplying coil and the power receiving coil.

Table 1 shows results of the measurement for relative permeabilities of the first magnetic materials, the second magnetic materials, and the third magnetic materials in Examples and Comparative Examples, and results of the evaluation for transmission efficiencies of the coil structures in Examples and Comparative Examples.

**Table 1**

| | Relative Permeability (µ') | | | Transmission Efficiency (Ratio relative to Comparative Example 1) |
|---|---|---|---|---|
| | First Magnetic Material | Second Magnetic Material | Third Magnetic Material | η |
| Example 1 | 3,400 | 3,400 | 5 | 121 |
| Example 2 | 2,000 | 2,000 | 5 | 113 |
| Example 3 | 3,400 | 20 | 5 | 109 |
| Example 4 | 3,400 | 400 | 5 | 111 |
| Example 5 | 6,000 | 6,000 | 5 | 113 |
| Example 6 | 9,000 | 9,000 | 5 | 116 |
| Comparative Example 1 | 3,400 | | 1 | 100 |
| Comparative Example 2 | 3,400 | 3,400 | 1 | 103 |
| Comparative Example 3 | 3,400 | 5 | 5 | 104 |
| Comparative Example 4 | 3,400 | 5 | 2 | 103 |

As shown in Table 1, the coil structures from Examples in which the second magnetic material 20 has a relative permeability that is three times or greater than the third magnetic material 30 have improved transmission efficiencies as compared to the coil structures from Comparative Examples in which the second magnetic material 20 is not arranged or the second magnetic material 20 has a relative permeability that is less than three times the third magnetic material 30. Therefore, when the power transmission coil structures of Examples are used, the magnetic flux generated from the coil can be effectively focused, and when such power transmission coil structures are applied to a power transmission device, excellent transmission efficiency can be ensured.

Thus, the power transmission coil structure according to the present disclosure is useful in reducing the proximity effect due to eddy currents between the coil conductors and in effectively focusing the magnetic flux generated from the coil to enable improved transmission efficiency of the power transmission device.

### DESCRIPTION OF REFERENCE CHARACTERS

1 Power transmission coil structure
2 Substrate
10 First magnetic material
20 Second magnetic material
21 Central magnetic material
22 Peripheral magnetic material
30 Third magnetic material
40 Coil

## Claims

1. A power transmission coil structure for receiving or supplying power, comprising:
a first magnetic material having a flat shape;
a second magnetic material including a central magnetic material provided on a center portion of a surface of the first magnetic material, and a peripheral magnetic material provided on a peripheral portion of the surface of the first magnetic material;
a third magnetic material provided between the central magnetic material and the peripheral magnetic material; and
a coil disposed in a surface portion of the third magnetic material and wound around the central magnetic material,
wherein the second magnetic material has a relative permeability that is three times or greater than the third magnetic material.

2. The power transmission coil structure according to claim 1, wherein the third magnetic material has a relative permeability greater than 1 and smaller than or equal to 10.

3. The power transmission coil structure according to claim 1 or 2, wherein the peripheral magnetic material protrudes further than the third magnetic material in a thickness direction of the first magnetic material.

4. A power transmission device comprising a power transmission coil structure according to any of claims 1 to 3.
